# EUROPEAN PATENT APPLICATION

(11) **EP 4 292 772 A1**
(43) Date of publication of application: **20.12.2023**
(21) Application number: 22179085.0
(22) Date of filing: 15.06.2022
(51) Int. Cl.: B25J 9/16

(54) **HEURISTIC-BASED ROBOTIC GRASPS**

(71) Applicant: Siemens Aktiengesellschaft, 80333 München (DE)
(72) Inventor: SHAHAPURKAR, Yash, Berkeley, 94704 (US); SOLOWJOW, Eugen, Berkeley, 94709 (US); UGALDE DIAZ, Ines, Redwood City, 94061 (US); ERDOGAN, Husnu Melih, Portland, 97210 (US)
(74) Representative: Horn Kleimann Waitzhofer Schmid-Dreyer Patent- und Rechtsanwälte PartG mbB

(57) **Abstract**

In some cases, images and depth maps can define bins with objects in random configurations. It is recognized herein that current approaches to training deep neural networks to perform grasp computations lack capabilities and efficiencies, such that the resulting grasp computations and grasps can be imprecise or cumbersome, among other shortcomings. Synthetic depth images can be labeled with grasp annotations that are generated based on heuristic-based analyses, so as to define annotated synthetic datasets. The annotated synthetic datasets can be used to train neural networks to determine the best grasp locations for different objects arranged in a variety of positions with respect to each other.

## Description

### BACKGROUND

Autonomous operations, such as robotic grasping and manipulation, in unknown or dynamic environments present various technical challenges. Autonomous operations in dynamic environments may be applied to mass customization (e.g., high-mix, low-volume manufacturing), on-demand flexible manufacturing processes in smart factories, warehouse automation in smart stores, automated deliveries from distribution centers in smart logistics, and the like. In order to perform autonomous operations, such as grasping and manipulation, in some cases, robots may learn skills using machine learning, in particular deep neural networks or reinforcement learning.

Traditional robotic grasping or picking generally relies on a teach-based approach, wherein operators can predefine the robot poses for pick and drop positions. Advances in computer vision and deep learning have enabled flexible robotic bin picking, such that, in some cases, pre-teaching pick and drop positions is no longer required. For example, camera systems, such as red, green, blue, depth (RGB-D) cameras, can collect color pictures or images and depth maps or point clouds, and neural networks can perform grasp computations based on the images or depth maps. In some cases, such images and depth maps can define bins with objects in random configurations. Various technical challenges remain, however, related to performing grasp computations and grasps for such objects. For example, it is recognized herein that current approaches to training deep neural networks to perform grasp computations lack capabilities and efficiencies, such that the resulting grasp computations and grasps can be imprecise or cumbersome, among other shortcomings.

### BRIEF SUMMARY

Embodiments of the invention address and overcome one or more of the described-herein shortcomings by providing methods, systems, and apparatuses that generate synthetic datasets for training grasping neural networks. For example, in various embodiments, synthetic depth images are labeled with grasp annotations that are generated based on heuristic-based analyses, so as to define annotated synthetic datasets. The annotated synthetic datasets can be used to train neural networks to determine the best grasp locations for different objects arranged in a variety of positions with respect to each other.

In an example aspect, a system includes a robot that defines an end effector configured to grasp objects. The system can further include a processor and a memory storing instructions that, when executed by the processor, configure the system to perform various operations. For the example, the system can obtain a depth image that defines a plurality of objects arranged in a plurality of respective positions. The system can identify a set of objects of the plurality of objects that each define a respective surface that is exposed to the end effector of the robot that is configured to grasp the plurality of objects, so as to identify exposed objects. The system can further determine a grasp location on each of the exposed objects. The grasp location can define an area of the respective exposed object at which the end effector contacts the exposed object so as to grasp the exposed object. In various examples, the system generates a probability or grasp label map that includes respective grasp annotations at the grasp location on each of the exposed objects. The depth image and the probability or grasp label map can define an annotated synthetic dataset that includes a plurality of grasp annotations. A neural network can be trained with the annotated synthetic dataset, to determine grasp locations on objects arranged in a plurality of configurations.

In some examples, the system compares the exposed objects to grasp ability criteria that is based on the end effector, so as to determine the candidate regions of the exposed objects that meet or exceed the graspability criteria. In an example in which the end effector defines a vacuum-based gripper, the system can evaluate the candidate regions so as to determine a planar score associated with each candidate region. The planar score can indicate a curvature defined by the respective candidate region. Furthermore, the system can make a comparison of each planar score to a predetermined threshold. In particular, based on the comparison, the system can determine the grasp annotations associated with each exposed object. Thus, in accordance with various embodiments, neural networks can be trained on the annotated synthetic datasets that are generated. After the training, by way of example, the neural networks can determine grasp locations on a variety of objects positioned in a container so as to be at least partially stacked on top of each other. The variety of objects can include objects defining different shapes and sizes as compared to each other.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 shows an example autonomous system in an example physical environment that includes a bin capable of containing various objects, in accordance with an example embodiment.
FIG. 2 is a flow diagram that illustrates operations that a computing system, for instance the system of FIG. 1, can perform, in accordance with example embodiments.
FIG. 3 illustrates a neural network model that can be included in the computing system, for instance the system shown in FIG. 1, in accordance with an example embodiment.
FIG. 4 illustrates example synthetic datasets that can include annotated grasp labels on objects, wherein the synthetic dataset can be generated by the computing system, for instance the system shown in FIG. 1, for training various neural networks (e.g., the neural network model of FIG. 3) in accordance with various example embodiments.
FIG. 5 illustrates a computing environment within which embodiments of the disclosure may be implemented.

### DETAILED DESCRIPTION

As an initial matter, it is recognized herein that various technical challenges in training neural networks relate more specifically to preparing and annotating appropriate data sets that generalize well for diverse use cases. It is further recognized herein that collecting real-world datasets for objects and robotic grasps can be an expensive process due to various factors such as, for example, varied object types, varied object shapes, camera sensor properties, cost of experimentation, etc. Further still, often these real-world datasets do not generalize well, for instance due to assumptions made related to specific cameras, gripper physics models, object shapes, or the like. In some cases, in order to better and/or more efficiently train neural networks, synthetic images (or datasets) of RGB-D images can be input into deep learning algorithms to learn grasp policies for unseen environments. It is recognized herein that such deep learning algorithms and neural networks can rely on the depth channel of a camera frame, such that the synthetic datasets require annotations for the training. Embodiments described herein address challenges, among others, related to annotating positive/negative grasps on such synthetic datasets that can transfer to real-world cases.

In particular, in an example, grasping datasets are generated that can generalize with respect to various object shapes, camera distances, gripper sizes, and bin environments. In various examples, the observation space is defined by depth images, so that annotations are made in the same space (depth images) instead of making annotations on the 3D object space and mapping those annotations to a 2D space. It is recognized herein that current approaches to vacuum suction-based grasping often use analytic models for grasp computation direction on 3D object space. For example, in some cases, a compliant suction contact model can quantify seal formation using a quasi-static spring system. It is further recognized herein, however, that such an approach can require that each 3D point of a single object is sampled separately in the world space, thereby preventing encoding of the static interaction of objects within themselves. Thus, by way of example, if objects are touching each other, current approaches might prevent a successful robotic pick of a given object that defines a surface area that computes a good seal with a suction cup end effector, for instance when the object is buried below another object. Further still, it is recognized herein these current approaches can result in datasets that include cropped depth images centered around a particular grasp candidate, which can increase unnecessarily increase the size of the data set (e.g., due to excessive sampling) while failing to account for inter-object static relations (e.g., overlap).

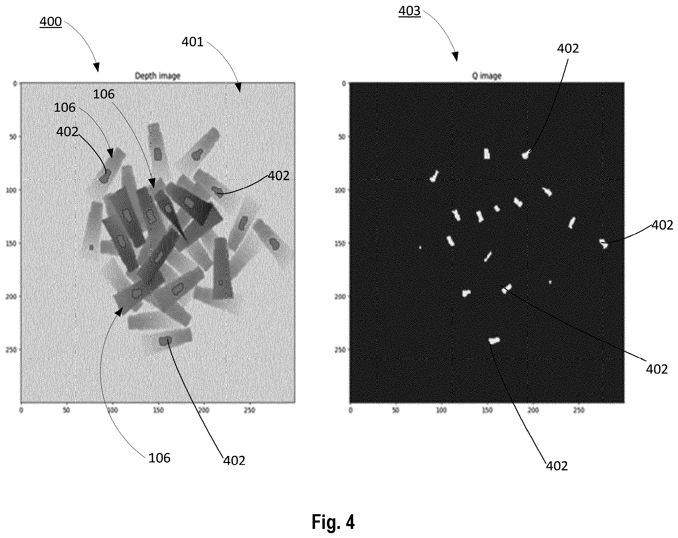

Embodiments described herein can address such shortcomings, among others, by annotating in the 2D space (e.g., depth images) instead of the 3D space. Furthermore, in accordance with various embodiments, grasp probability maps are generated that encode spatial information of objects in a given scene, such that sampling-based grasp policies are not required. Such maps, for instance a grasp probability or grasp label map 403 (see FIG. 4), can define a grasp label for each pixel of the image. Additionally, the maps can more efficiently train fully convolutional neural networks, and can be deployed with a faster runtime, as compared to using annotated 3D images. For example, because a grasp label can be generated for each pixel of a given image, the images and labels can define the same dimensions as each other, such that fully convolutional networks can be trained. It is recognized herein that, a network with a single output channel can be trained with sampling-based grasp policies, instead of training fully convolutional networks. Thus, in an example, a system can determine the state of a given bin and learn the static interaction between the objects in the scene, so as to identify objects that are too close to boundaries, identify objects that are cluttered and difficult to grasp, identify objects that are easier to grasp as compared to the other objects, and the like. In particular, grasp probability maps (e.g., map 403) can be generated for depth images (e.g., depth image 401), and such probability maps and depth images can train various grasp neural networks (e.g., fully convolutional networks) to perform efficient and accurate grasp computations.

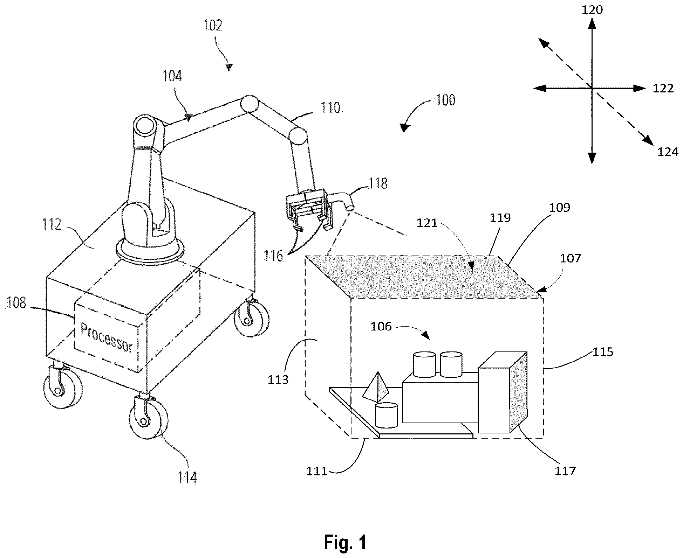

Referring now to FIG. 1, an example industrial or physical environment or workspace 100 is shown. As used herein, a physical environment or workspace can refer to any unknown or dynamic industrial environment. Unless otherwise specified, physical environment and workspace can be used interchangeably herein, without limitation. A reconstruction or model may define a virtual representation of the physical environment or workspace 100, or one or more objects 106 within the physical environment 100. For purposes of example, the object 106 can be disposed in a bin or container, for instance a bin 107, so as to be positioned for grasping. Unless otherwise specified herein, bin, container, tray, box, or the like can be used interchangeably, without limitation. By way of example, the object 106 can be picked from the bin 107 by one or more robots, and transported or placed in another location, for instance outside the bin 107. The example object 106 is illustrated as a rectangular object, for instance a box, though it will be understood that the objects 106 can be alternatively shaped or define alternative structures as desired, and all such objects are contemplated as being within the scope of this disclosure.

The physical environment 100 can include a computerized autonomous system 102 configured to perform one or more manufacturing operations, such as assembly, transport, or the like. The autonomous system 102 can include one or more robot devices or autonomous machines, for instance an autonomous machine or robot device 104, configured to perform one or more industrial tasks, such as bin picking, grasping, or the like. The system 102 can include one or more computing processors configured to process information and control operations of the system 102, in particular the autonomous machine 104. The autonomous machine 104 can include one or more processors, for instance a processor 108, configured to process information and/or control various operations associated with the autonomous machine 104. An autonomous system for operating an autonomous machine within a physical environment can further include a memory for storing modules. The processors can further be configured to execute the modules so as to process information and generate models based on the information. It will be understood that the illustrated environment 100 and the system 102 are simplified for purposes of example. The environment 100 and the system 102 may vary as desired, and all such systems and environments are contemplated as being within the scope of this disclosure.

Still referring to FIG. 1, the autonomous machine 104 can further include a robotic arm or manipulator 110 and a base 112 configured to support the robotic manipulator 110. The base 112 can include wheels 114 or can otherwise be configured to move within the physical environment 100. The autonomous machine 104 can further include an end effector 116 attached to the robotic manipulator 110. The end effector 116 can include one or more tools configured to grasp and/or move objects 106. Example end effectors 116 include finger grippers or vacuum-based grippers. The robotic manipulator 110 can be configured to move so as to change the position of the end effector 116, for example, so as to place or move objects 106 within the physical environment 100. The system 102 can further include one or more cameras or sensors, for instance a depth camera or three-dimensional (3D) point cloud camera 118, configured to detect or record objects 106 within the physical environment 100. The camera 118 can be mounted to the robotic manipulator 110 or otherwise configured to generate a 3D point cloud of a given scene, for instance the physical environment 100. Alternatively, or additionally, the one or more cameras of the system 102 can include one or more standard two-dimensional (2D) cameras that can record or capture images (e.g., RGB images or depth images) from different viewpoints. Those images can be used to construct 3D images. For example, a 2D camera can be mounted to the robotic manipulator 110 so as to capture images from perspectives along a given trajectory defined by the manipulator 110.

Still referring to FIG. 1, the camera 118 can be configured to capture images of the bin 107, and thus the objects 106, along a first or transverse direction 120. In some cases, a deep neural network is trained on a set of objects. Based on its training, the deep neural network can calculate grasp scores for respective regions of a given object, for instance an object within the bin 107. For example, the robot device 104 and/or the system 102 can define one or more neural networks configured to learn various objects so as to identify poses, grasp points (or locations), and/or or affordances of various objects that can be found within various industrial environments. An example system or neural network model can be configured to learn objects and grasp locations, based on images for example, in accordance with various example embodiments. After the neural network is trained, for example, images of objects can be sent to the neural network by the robot device 104 for classification, in particular classification of grasp locations or affordances.

Referring again to FIG. 1, the camera 118 can define a depth camera configured to capture depth images of the workspace 100 from a perspective along the transverse direction 120. For example, the bin 107 can define a top 109 end and a bottom end 111 opposite the top end 109 along the transverse direction 120. The bin 107 can further define a first side 113 and a second side 115 opposite the first side 113 along a second or lateral direction 122 that is substantially perpendicular to the transverse direction 120. The bin 107 can further define a front end 117 and a rear end 119 opposite the front end 117 along a third or longitudinal direction 124 that is substantially perpendicular to both the transverse and lateral directions 120 and 122, respectively. Though the illustrated bin 107 defines a rectangular shape, it will be understood that bins or containers can be alternatively shaped or sized, and all such bins or containers are contemplated as being within the scope of this disclosure.

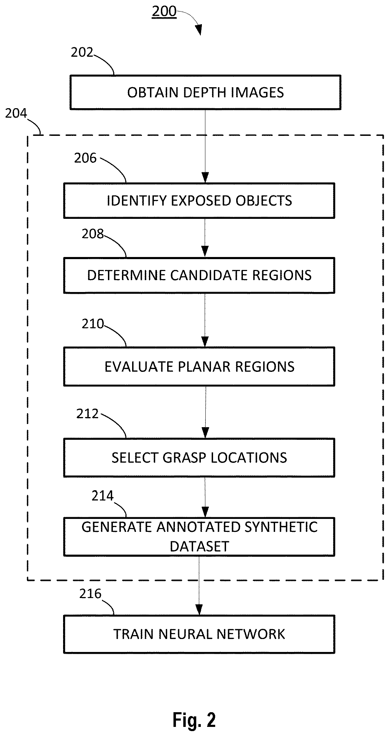

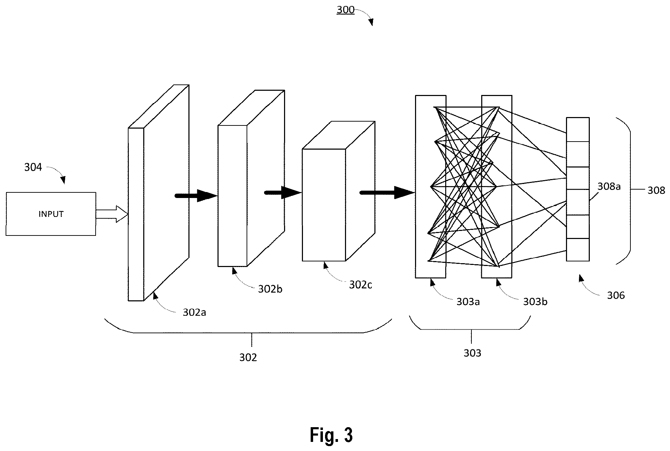

Referring also to FIG. 2, example operations 200 are shown that can be performed by the system 102, which can include one or more neural networks, for instance an example neural network 300 (see FIG. 3). At 202, the system 102, in particular, the camera 118, can capture depth images, for instance a depth image 401 (see FIG. 4). Alternatively, the depth image 401 can define a synthetic depth image, such that, at 202, the system 102 can obtain synthetic depth images. Synthetic depth images can define an image that includes objects or information that are artificially generated instead of being generated by real-world events (e.g., captured by a camera). In an example, the synthetic depth image 401 can include a plurality of objects 106. At 204, the system 102 can generate labels for the depth images. Synthetic images, for instance the synthetic depth image 401, can be obtained using various open source or physics engine (e.g., pybullet, gazebo, mujoco) and an open source rendering tool (e.g. pyrender). In such engines, for example, random objects can be loaded using mesh models of the engines. The objects can be placed or dropped in artificial bins so as to define a simulated scene. A renderer tool can then take snapshots of the simulated scene, so as to generate synthetic datasets, for instance the synthetic depth image 401. In particular, for example, the system 102 can capture snapshots, for instance RGB-D images, of a simulated scene that includes objects 106 in the bin 107. As further described herein, the system 102 can use synthetic RGB-D images, such as the depth image 401, to create grasp label maps (e.g., map 403) as annotations.

By way of example, referring also to FIG. 4, the system 102 can generate annotated grasp labels 402 associated with the given depth image 401, so as to define an annotated depth image or annotated synthetic data image 400. The grasp labels 402 can indicate locations on the objects 106 at which the respective objects 106 can be grasped by the end effector 116. The grasp labels 402 can be generated based on the type of end effector 116 (e.g., finger gripper, vacuum-based gripper, etc.) or the geometry (e.g., size, shape) of the end effector 116. By way of example, the grasp labels 402 may be different, for instance represent different locations, for a vacuum-based (e.g., suction cup) gripper defining a first radius as compared to a vacuum-based gripper defining a second radius that is larger than the first radius. By way of further example, the grasp labels 402 may be different so as to represent different grasping locations for a vacuum-based end effector 116 as compared to a finger-gripper end effector 116. The grasp labels 402 can further be based on interactions of the objects 106, which can be referred to as object interactions. The object interactions can indicate a position of an object with respect to other objects. For example, a given label 402 might indicate object interactions that refer to the validity of the given label 402 on a particular object in the scene given that the particular object is touching another object. In an example, objects 106 that are sufficiently singulated or isolated are labeled positive (as able to be grasped), such that other objects 106 that are hidden or occluded are not associated with positive grasp labels because they cannot be grasped. In an example, each grasp label 402 can define one or more pixels that have a specific color on the map 403, so as to differentiate the grasp locations on the object from other locations on the object, though it will be understood that the grasp labels can be alternatively shaped or configured to so as identify the grasp locations on the objects, and all such alternatively configured annotated grasp labels are contemplated as being within the scope of this disclosure.

With continuing reference to FIG. 2, to generate the annotated grasp labels 402, the system 102 can identify objects 106 that are exposed, at 206. In an example, the system 102 defines a rendering tool configured to generate segmentation masks for each object of interest of the plurality of objects 106. The segmentation mask may change if a new object occludes the current object of interest. Thus, the system 102 can determine whether the segmentation mask changes by checking the segmentation mask in each scene for each object of interest. If the segmentation mask changes, the system 102 can determine that a given object of interest is occluded by a new object. In various examples, the above-described segmentation masks define binary images, such that the system 102 can determine whether a segmentation mask changes by performing a pixelwise comparison of a 'before' version and an 'after' version of the segmentation mask. If the 'before' and 'after' images have less than a predetermined threshold (e.g., 95%) of common pixels, the system 102 can classify the object of interest as occluded or unexposed such that the object is not associated with a positive grasp label. It will be understood that the predetermined threshold can vary as desired.

In various examples, using trained neural networks, the system 102 can determine a singularity score associated with each of the objects 106 in the depth image 401. The singularity score can represent or indicate a percentage of common pixels, or the predetermined threshold described above, related to the before and after images of the segmentation mask provided by the rendering tool. Thus, for example, the singularity score can indicate the degree to which a respective object is exposed with respect to the end effector 116, such that the respective object can be grasped by the end effector 116 when the object is exposed. By way of example, objects that are disposed beneath other objects are typically harder to grasp, and thus might have a lower singularity score, than objects that are separate from, and on top, of other objects. In some cases, for example, the system 102 can identify objects that define a surface that is exposed to the camera 118 along the transverse direction 120, such that no object is between the surface and the camera 118 along the transverse direction 120. Additionally, or alternatively, the system 102 can identify objects that are least cluttered compared to other objects, such that the identified objects define space and clearance for grasping by the end effector 116. For example, at 206, based on the depth image 401, the system 102 can rank the objects 106 based on their respective exposure. In an example, the exposure of a given object can be determined by calculating the degree to which other objects overlap the object along the transverse direction 120. Such overlap determination can take into account the size of the given object. Additionally, or alternatively, the exposure of a given object can be determined based on a percentage of surface area of the object that is exposed, for instance exposed along the transverse direction 120 such that no objects are between the end effector 116 and the exposed surface area along the transverse direction 120. Thus, at 206, the system 102 can identify exposed objects 106.

At 208, the system can determine candidate regions for grasping the exposed objects. The candidate regions can define areas or locations of the exposed objects that are graspable. In particular, at 208, the system 102 can compare pixels of the depth image 401 to graspability criteria, so as to determine the candidate regions. In an example, the candidate regions are associated with the pixels that meet or exceed a grasp threshold determined by the graspability criteria. The graspability criteria can depend on various parameters of the environment 100, for instance the type or size of the end effector 116, the distance of the camera 118 from the objects 106, the size or shape of the objects 106, and the like. In some cases, by comparing the candidate regions to the graspability criteria, the system 102 can determine whether objects are large enough, in particular whether each object defines enough exposed surface area (candidate regions), for a vacuum-based gripper to be placed on the respective objects. In various examples, the system defines the dimensions of the end effector 116, for instance a suction cup, in pixels, such that a number of pixels defined by the suction cup can be compared to a number of pixels defined by respective candidate regions, so as to identify candidate regions, and thus objects that are grasp candidates. The system 102 can map the physical size or dimensions of the end effector 116 to pixels in the image space defined by the depth image 401 based on the height of the camera 118 or the distance of the camera 118 from the bottom end 111 along the transverse direction 120. In particular, for example, by comparing the pixels defined by the end effector 116 to the pixels defined by exposed objects, the system 102 can eliminate exposed objects as grasp candidates that define boundaries over which the end effector 116 would extend when attempting a grasp.

In an example in which the end effector 116 defines a vacuum-based gripper, at 210, the system 102 can evaluate or identify planar regions on the exposed objects, such that a suction seal can be formed on a given exposed object by the vacuum-based gripper. For example, the system 102 can run a plane fit algorithm on each pixel of the exposed objects (or each exposed pixel), so as to determine a residual value for reach exposed pixel. Using the residual values, the planar surfaces can be ranked. For example, surfaces that are more planar than others can have lower residual values, and visa-vera. A set of ranked pixels, for instance the top 10 or 20%, might satisfy the planarity condition so as to be sufficiently planar. It will be understood that the percentage of exposed pixels that satisfy the planarity condition can vary.

Thus, the system 102 can evaluate the candidate regions of the exposed objects, so as to determine whether each candidate region is sufficiently planar. A region can define space around a candidate grasp pixel. The space around the grasp pixel can be defined by the dimensions of the end effector 116, for instance the dimensions of a suction-based gripper. In some examples, the system 102 scores each candidate region based on how planar, or flat, the area is that is defined by the candidate region. In particular, for example, the system 102 can perform gradient analysis, distance field criteria techniques, depth histogram techniques, and/or plane-fit techniques so as to compute a planar score associated with each candidate region. The planar scores can be indicative of a curvature defined by the respective candidate region. In an example, the normal vector to the respective planes defined by each candidate region defines the grasp approach angle of the robot 104, in particular the end effector 116, for each candidate region. Thus, the system 102 can compare the grasp approach angle associated with each candidate region to a predetermined tolerance defined by the robot 104, so as to filter out candidate regions associated with grasp approach angles that are outside the tolerance of the robot 104. In particular, for example, based on planar scores associated with each candidate region, the system 102 can eliminate candidate regions associated with grasp approach angles that are outside the predetermined tolerance, for instance candidate regions associated with grasp approach angles that are too steep, so as to define select or best candidate regions. Thus, the planar scores associated with candidate regions, and thus the scores associated with the candidate grasp pixels, can be used to select the best intra-object candidates, the best inter-object candidates, or a combination thereof. The intra-object candidates can refer to candidate grasp pixels that lie on the same object, and inter-object candidates can refer to candidate grasp pixels that lie on the different objects. In an example, the selected candidate grasp regions are represented by the labels 402 on the map 403, such that the grasp label map 403 can define an aggregation of the possible grasps.

In some cases, the system 102 can compare a grasp candidate region on one object to a grasp candidate region on a different object in the same scene, for instance the environment 100. In particular, the respective planar scores can be compared, such that the grasp candidate region associated with the higher score can be used. For example, with continuing reference to FIG. 2, at 212, based on the identified planar regions that indicate the best candidate regions, the system 102 can filter the best candidate regions so as to select the final or best grasp locations represented by grasp labels, for instance the annotated grasp labels 402. In particular, for example, the system 102 can filter or reject grasps that would result in physical instability of the grasped object, for instance due to weigh distribution of the object relative to the end effector 116. In some cases, the system 102 determines the centroid of each object 106. Based on the centroid, the system 102 can determine a boundary within which the respective object can be grasped in a stable manner. Grasp locations that fall outside of the boundary associated with the centroid can be rejected. Additionally, or alternatively, the system 102 can determine boundaries or edges defined by the objects. The system 102 can determine respective thresholds with respect to the edges, so that grasps that are outside the threshold, so as to define grasps that are too close to the edge, can be rejected. In various examples, the threshold with respect to the edges of the objects, and the boundaries relate to the centroids of the objects, can be determined based on the size of the end effector 116 relative to the size of the respective object. At 214, after filtering the candidate grasp regions, the system can generate an annotated synthetic data sample, for instance the grasp label or probability map 403, that defines the best grasp locations that, for example, can be identified by the grasp labels 402. The system 102 can also classify hidden or cluttered objects as negative grasps, such that the map 403 can include annotations associated with the negative grasps. The system can generate the probability map 403 from the synthetic depth image 401, such that the probability map 403 includes the grasp labels 402 and defines a heuristically generated annotation. Thus, the depth image 401 and the map 403 can define an annotated synthetic dataset that can be used to train a neural network to identify grasps on objects in bins that are arranged in a variety of configurations, for instance stacked on top of each other. Referring to FIG. 4, the annotated depth image 400 includes the grasp labels 402 overlayed on the depth image 401 for visualization.

At 216, the synthetic datasets or images, for instance the synthetic data image 401 and the probability map 403, can be input into a neural network to train the neural network in a supervised manner to identify grasp locations on various objects in various arrangements with various end effectors or grippers. Thus, the synthetic depth image 401 can define the input image of the neural network and the map 403 can define the input label for that image 401. In various examples, each positive pixel from the map 403 defines a grasp candidate on the synthetic depth image 401.

In particular, for example, referring to FIG. 3, a computing system, for instance the system 102, can define or more systems or networks 300 that can be trained on a plurality of synthetic input images or label data 304. The input data 304 can include the synthetic depth image 401 and the probability map 403. It will be understood that that the input data is not limited to the examples described herein. That is, the annotated synthetic data can vary, for instance the data can include various objects (e.g., different shapes and sizes) positioned in a variety of configurations, and all such annotated synthetic data is contemplated as being within the scope of this disclosure.

With continuing reference to FIG. 3, the network 300 can define an adversarial variational autoencoder (AVAE) system, for instance a convolutional AVAE. The example neural network 300 includes a plurality of layers, for instance an input layer 302a configured to receive data, an output layer 303b configured to generate class or output scores associated with the data or portions of the data. For example, the output layer 303b can be configured to determine grasp scores, singularity scores, or planar scores. The neural network 300 further includes a plurality of intermediate layers connected between the input layer 302a and the output layer 303b. In particular, in some cases, the intermediate layers and the input layer 302a can define a plurality of convolutional layers 302. The intermediate layers can further include one or more fully connected layers 303. The convolutional layers 302 can include the input layer 302a configured to receive training and test data, such as annotated depth images. In some cases, training data that the input layer 302a receives includes synthetic data of arbitrary objects. Synthetic data can refer to training data that has been generated to render objects in different positions, for instance in a container. The convolutional layers 302 can further include a final convolutional or last feature layer 302c, and one or more intermediate or second convolutional layers 302b disposed between the input layer 302a and the final convolutional layer 302c. It will be understood that the illustrated model 300 is simplified for purposes of example. In particular, for example, models may include any number of layers as desired, in particular any number of intermediate layers, and all such models are contemplated as being within the scope of this disclosure.

The fully connected layers 303, which can include a first layer 303a and a second or output layer 303b, include connections between layers that are fully connected. For example, a neuron in the first layer 303a may communicate its output to every neuron in the second layer 303b, such that each neuron in the second layer 303b will receive input from every neuron in the first layer 303a. It will again be understood that the model is simplified for purposes of explanation, and that the model 300 is not limited to the number of illustrated fully connected layers 303. In contrast to the fully connected layers, the convolutional layers 302 may be locally connected, such that, for example, the neurons in the intermediate layer 302b might be connected to a limited number of neurons in the final convolutional layer 302c. The convolutional layers 302 can also be configured to share connections strengths associated with the strength of each neuron.

Still referring to FIG. 3, the input layer 302a can be configured to receive inputs 304, for instance the depth image 401 or the annotated grasp label map 403, and the output layer 303b can be configured to return an output 306. The output 306 can include one or more classifications or scores associated with the input 304. For example, the output 306 can include an output vector that indicates a plurality of scores 308 associated with various portions, for instance pixels, of the corresponding input 304. Thus, the output layer 303b can be configured to generate scores 308 associated with the image 304, in particular associated with pixels of the image 304, thereby generating grasp, singularity, or planar scores associated with locations of the objects depicted in the image 304.

Thus, without being bound by theory, embodiments described herein can create custom synthetic scenes defining objects in a bin, and can understand the inter-object dependencies in the bin in the observation space (e.g., rendered depth images). With the heuristic criteria for annotations described herein, annotated datasets specific to certain gripper geometries can be generated, for instance non-circular gripper cups or cups of different radii. At the same time, in accordance with various embodiments, certain grasps can be characterized based on the general physical understanding of the robot arm reach and its interference with a given bin. Moreover, in some cases, it is recognized herein that the pipeline is easily extendable to work for a multi-suction cups array. Furthermore, by making annotations directly in the observation space, as described herein, the resulting annotated datasets can retain the domain information, as opposed to mapping annotations from a higher dimensional space to a lower dimensional observation space. Furthers still, it is recognized herein that such annotations in the observation space can enable the system to run faster and more efficiently as compared to approaches that map annotations from a higher dimensional space to a lower dimensional space.

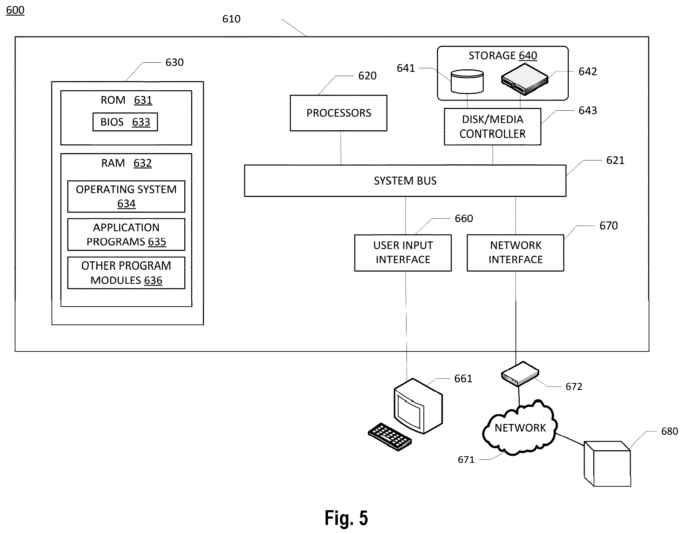

FIG. 5 illustrates an example of a computing environment within which embodiments of the present disclosure may be implemented. A computing environment 600 includes a computer system 610 that may include a communication mechanism such as a system bus 621 or other communication mechanism for communicating information within the computer system 610. The computer system 610 further includes one or more processors 620 coupled with the system bus 621 for processing the information. The system 102 may include, or be coupled to, the one or more processors 620.

The processors 620 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 620 may have any suitable micro architecture design that includes any number of constituent components such as, for example, registers, multiplexers, arithmetic logic units, cache controllers for controlling read/write operations to cache memory, branch predictors, or the like. The micro architecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 621 may include at least one of a system bus, a memory bus, an address bus, or a message bus, and may permit exchange of information (e.g., data (including computer-executable code), signaling, etc.) between various components of the computer system 610. The system bus 621 may include, without limitation, a memory bus or a memory controller, a peripheral bus, an accelerated graphics port, and so forth. The system bus 621 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 5, the computer system 610 may also include a system memory 630 coupled to the system bus 621 for storing information and instructions to be executed by processors 620. The system memory 630 may include computer readable storage media in the form of volatile and/or nonvolatile memory, such as read only memory (ROM) 631 and/or random access memory (RAM) 632. The RAM 632 may include other dynamic storage device(s) (e.g., dynamic RAM, static RAM, and synchronous DRAM). The ROM 631 may include other static storage device(s) (e.g., programmable ROM, erasable PROM, and electrically erasable PROM). In addition, the system memory 630 may be used for storing temporary variables or other intermediate information during the execution of instructions by the processors 620. A basic input/output system 633 (BIOS) containing the basic routines that help to transfer information between elements within computer system 610, such as during start-up, may be stored in the ROM 631. RAM 632 may contain data and/or program modules that are immediately accessible to and/or presently being operated on by the processors 620. System memory 630 may additionally include, for example, operating system 634, application programs 635, and other program modules 636. Application programs 635 may also include a user portal for development of the application program, allowing input parameters to be entered and modified as necessary.

The operating system 634 may be loaded into the memory 630 and may provide an interface between other application software executing on the computer system 610 and hardware resources of the computer system 610. More specifically, the operating system 634 may include a set of computer-executable instructions for managing hardware resources of the computer system 610 and for providing common services to other application programs (e.g., managing memory allocation among various application programs). In certain example embodiments, the operating system 634 may control execution of one or more of the program modules depicted as being stored in the data storage 640. The operating system 634 may include any operating system now known or which may be developed in the future including, but not limited to, any server operating system, any mainframe operating system, or any other proprietary or non-proprietary operating system.

The computer system 610 may also include a disk/media controller 643 coupled to the system bus 621 to control one or more storage devices for storing information and instructions, such as a magnetic hard disk 641 and/or a removable media drive 642 (e.g., floppy disk drive, compact disc drive, tape drive, flash drive, and/or solid state drive). Storage devices 640 may be added to the computer system 610 using an appropriate device interface (e.g., a small computer system interface (SCSI), integrated device electronics (IDE), Universal Serial Bus (USB), or FireWire). Storage devices 641, 642 may be external to the computer system 610.

The computer system 610 may also include a field device interface 665 coupled to the system bus 621 to control a field device 666, such as a device used in a production line. The computer system 610 may include a user input interface or GUI 661, which may comprise one or more input devices, such as a keyboard, touchscreen, tablet and/or a pointing device, for interacting with a computer user and providing information to the processors 620.

The computer system 610 may perform a portion or all of the processing steps of embodiments of the invention in response to the processors 620 executing one or more sequences of one or more instructions contained in a memory, such as the system memory 630. Such instructions may be read into the system memory 630 from another computer readable medium of storage 640, such as the magnetic hard disk 641 or the removable media drive 642. The magnetic hard disk 641 and/or removable media drive 642 may contain one or more data stores and data files used by embodiments of the present disclosure. The data store 640 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 620 may also be employed in a multi-processing arrangement to execute the one or more sequences of instructions contained in system memory 630. In alternative embodiments, hard-wired circuitry may be used in place of or in combination with software instructions. Thus, embodiments are not limited to any specific combination of hardware circuitry and software.

As stated above, the computer system 610 may include at least one computer readable medium or memory for holding instructions programmed according to embodiments of the invention and for containing data structures, tables, records, or other data described herein. The term "computer readable medium" as used herein refers to any medium that participates in providing instructions to the processors 620 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 641 or removable media drive 642. Non-limiting examples of volatile media include dynamic memory, such as system memory 630. Non-limiting examples of transmission media include coaxial cables, copper wire, and fiber optics, including the wires that make up the system bus 621. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions. The computing environment 400 may further include the computer system 610 operating in a networked environment using logical connections to one or more remote computers, such as remote computing device 680. The network interface 670 may enable communication, for example, with other remote devices 680 or systems and/or the storage devices 641, 642 via the network 671. Remote computing device 680 may be a personal computer (laptop or desktop), a mobile device, a server, a router, a network PC, a peer device or other common network node, and typically includes many or all of the elements described above relative to computer system 610. When used in a networking environment, computer system 610 may include modem 672 for establishing communications over a network 671, such as the Internet. Modem 672 may be connected to system bus 621 via user network interface 670, or via another appropriate mechanism.

Network 671 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 610 and other computers (e.g., remote computing device 680). The network 671 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 671.

It should be appreciated that the program modules, applications, computer-executable instructions, code, or the like depicted in FIG. 5 as being stored in the system memory 630 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 610, the remote device 680, and/or hosted on other computing device(s) accessible via one or more of the network(s) 671, may be provided to support functionality provided by the program modules, applications, or computer-executable code depicted in FIG. 5 and/or additional or alternate functionality. Further, functionality may be modularized differently such that processing described as being supported collectively by the collection of program modules depicted in FIG. 3 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 5 may be implemented, at least partially, in hardware and/or firmware across any number of devices.

It should further be appreciated that the computer system 610 may include alternate and/or additional hardware, software, or firmware components beyond those described or depicted without departing from the scope of the disclosure. More particularly, it should be appreciated that software, firmware, or hardware components depicted as forming part of the computer system 610 are merely illustrative and that some components may not be present or additional components may be provided in various embodiments. While various illustrative program modules have been depicted and described as software modules stored in system memory 630, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A computer-implemented method, the method comprising:
obtaining a depth image, the depth image defining a plurality of objects arranged in a plurality of respective positions;
identifying a set of objects of the plurality of objects that each define a respective surface that is exposed to an end effector of a robot that is configured to grasp the plurality of objects, so as to identify exposed objects;
determining a grasp location on each of the exposed objects, the grasp location defining an area of the respective exposed object at which the end effector contacts the exposed object so as to grasp the exposed object;
generating a probability map that includes respective grasp annotations at the grasp location on each of the exposed objects; the depth image and the probability map defining an annotated synthetic dataset; and
training a neural network, with the annotated synthetic dataset, to determine grasp locations on objects arranged in a plurality of configurations.

2. The method as recited in claim 1, the method further comprising:
comparing the exposed objects to graspability criteria that is based on the end effector, so as to determine candidate regions of the exposed objects that meet exceed the graspability criteria.

3. The method as recited in claim 2, wherein the end effector defines a vacuum-based gripper, the method further comprising:
evaluating the candidate regions so as to determine a planar score associated with each candidate region, the planar scores indicative of a curvature defined by the respective candidate region.

4. The method as recited in claim 3, the method further comprising:
making a comparison of each planar score to a predetermined threshold; and
based on the comparison, determining the grasp annotations associated with each exposed object.

5. The method as recited in any of the preceding claims, wherein the plurality of configurations includes objects positioned in a container so as to at least partially be stacked on top of each other, the objects defining different shapes and sizes as compared to each other.

6. A system comprising a robot defining an end effector configured to grasp objects, the system further comprising:
a processor; and
a memory storing instructions that, when executed by the processor, configure the system to:
obtain a depth image, the depth image defining a plurality of objects arranged in a plurality of respective positions;
identify a set of objects of the plurality of objects that each define a respective surface that is exposed to the end effector of the robot, so as to identify exposed objects;
determine a grasp location on each of the exposed objects, the grasp location defining an area of the respective exposed object at which the end effector contacts the exposed object so as to grasp the exposed object;
generate a probability map that includes respective grasp annotations at the grasp location on each of the exposed objects; the depth image and the probability map defining an annotated synthetic dataset; and
train a neural network, with the annotated synthetic dataset, to determine grasp locations on objects arranged in a plurality of configurations.

7. The system as recited in claim 6, the memory further storing instructions that, when executed by the processor, further configure the system to:
compare the exposed objects to graspability criteria that is based on the end effector, so as to determine the candidate regions of the exposed objects that meet or exceed the graspability criteria.

8. The system as recited in claim 7, wherein the end effector defines a vacuum-based gripper, and the memory further stores instructions that, when executed by the processor, further configure the system to:
evaluate the candidate regions so as to determine a planar score associated with each candidate region, the planar score indicative of a curvature defined by the respective candidate region.

9. The system as recited in claim 8, the memory further storing instructions that, when executed by the processor, further configure the system to:
make a comparison of each planar score to a predetermined threshold; and
based on the comparison, determine the grasp annotations associated with each exposed object.

10. The system as recited in any one of claims 6 to 9, wherein the plurality of configurations includes objects positioned in a container so as to be at least partially stacked on top of each other, the objects defining different shapes and sizes as compared to each other.
